# EUROPEAN PATENT SPECIFICATION

(11) **EP 2 332 813 B1**
(45) Date of publication and mention of the grant of the patent: **12.11.2014**
(21) Application number: 10192854.7
(22) Date of filing: 29.11.2010
(51) Int. Cl.: B62J 37/00, B62J 35/00

(54) **Scooter type vehicle**
Rollerartiges Fahrzeug
Véhicule de type scooter

(30) Priority: 10.12.2009 JP 2009280939
(43) Date of publication of application: 15.06.2011
(73) Proprietor: Honda Motor Co., Ltd., Tokyo 107-8556 (JP)
(72) Inventor: Yamada, Hiroshi, Saitama 351-0193 (JP); Terada, Mitsuru, Saitama 351-0193 (JP); Ishii, Tsubasa, Saitama 351-0193 (JP)
(74) Representative: Ilgart, Jean-Christophe

(56) References cited:
- EP-A2- 1 972 534
- GB-A- 682 917
- JP-A- 2002 206 466
- JP-A- 2006 130 975
- JP-A- 2008 261 340
- JP-A- 2009 226 989

## Description

### [Technical Field]

The present invention relates to an improvement in a scooter type vehicle, particularly to an improvement of the layout of a fuel filter provided in a scooter type vehicle.

### [Background Art]

A scooter type vehicle with the features of the preamble of claim 1 is known from the document JP 2006 130 975.

As a conventional scooter type vehicle, there has been known one in which a fuel filter is provided at an intermediate portion of a fuel supply pathway for supplying a fuel reserved in a fuel tank into a combustion chamber of an engine (see, for example, Patent Document 1 (FIGS. 1 and 2)).

As shown in FIG. 1 of Patent Document 1, the scooter type vehicle (10) (here and hereinafter, parenthesized symbols are reference symbols used in Patent Document 1) has a unit swing type engine (22) swingably mounted on a rear frame (135b), and a fuel tank (25) disposed under a step floor (24) on which to mount the rider's feet on the front side of the engine (22).

As shown in FIG. 2 of Patent Document 1, the fuel in the fuel tank (25) is fed through a conduit (321) to a fuel filter (34), in which the fuel is clarified, before being supplied to the engine through a fuel pump (26).

However, in the case where the fuel filter (34) is disposed on the rear side of the fuel tank (25) in the vehicle front-rear direction and in a space on the lower side of a cylinder head (308) and a head cover (311), as shown in FIG. 1 of Patent Document 1, oscillation of the unit swing type engine (22) causes the cylinder head (308) and the head cover (311) to be also oscillated up and down, so that the cylinder head (308) and the head cover (311) come closer to the fuel filter (34).

In order to secure a clearance between the fuel filter (34) and each of the cylinder head (308) and the head cover (311) thus coming closer to the fuel filter (34), a method may be contemplated in which the fuel filter (34) is made smaller in size. When the fuel filter (34) is made smaller in size, however, the cycle time of element replacement for the fuel filter may be shortened. Accordingly, there is a need for a scooter type vehicle in which the size of a fuel filter can be freely set, without any restriction imposed due to oscillations of a unit swing type engine.

### [Prior Art Document]

### [Patent Document]

[Patent Document 1]
Japanese Patent Laid-open No. 2002-206466

### [Summary of the Invention]

### [Problem to be Solved by the Invention]

It is an object of the present invention to provide a scooter type vehicle in which the capacity of a fuel filter can be freely set without any restriction imposed due to oscillations of a unit swing type engine.

### [Means for Solving the Problem]

The invention according to claim 1 resides in a scooter type vehicle including a body frame, a unit swing type engine swingably supported on the body frame through a link, a fuel tank supported on the body frame, a fuel supply pathway through which a fuel in the fuel tank is supplied to the unit swing type engine, and a fuel filter which is disposed at an intermediate portion of the fuel supply pathway and by which the fuel is clarified, characterized in that the link is attached to a lower portion of a crankcase of the unit swing type engine, and the fuel filter is disposed on an upper surface of the crankcase.

The invention according to claim 2 is characterized in that the unit swing type engine has a cylinder part projecting from the crankcase toward the vehicle front side, and an exhaust pipe extending from the cylinder part toward the vehicle rear side through the lower side of the crankcase.

The invention according to claim 3 is characterized in that an intake system is disposed on the upper side of the unit swing type engine; the intake system includes an intake pipe connected to the cylinder part and extending rearward from the cylinder part, a throttle body connected to a rear portion of the intake pipe, a connecting tube connected to a rear portion of the throttle body and passing on the upper side of the crankcase, and an air cleaner connected to a rear portion of the connecting tube; and the fuel filter is disposed on the lower side of the connecting tube.

The invention according to claim 4 is characterized in that the scooter type vehicle has a luggage box dismountably supported on the body frame on the upper side of the intake system, and the fuel filter is disposed on an upper surface of the crankcase, with its longitudinal direction set along the vehicle width direction; and mounting and dismounting of the fuel filter can be carried out on the upper side of the vehicle when the luggage box has been dismounted from the body frame.

The invention according to claim 5 is characterized in that the fuel filter is accommodated in a support case, and the support case is mounted to the crankcase.

The invention according to claim 6 is characterized in that a fastening direction in fastening the support case to the crankcase is in the vehicle vertical direction, and a fastening part for fastening the support case to the crankcase is located on an outer side of the connecting tube in the vehicle width direction.

The invention according to claim 7 is characterized in that a starter motor is disposed on an upper surface of the crankcase, and the fuel filter is disposed on the upper surface of the crankcase, with its longitudinal direction set along the longitudinal direction of the starter motor.

The invention according to claim 8 is characterized in that a pre-pump filter by which the fuel in the fuel tank is clarified, a fuel pump disposed on the downstream side of the pre-pump filter, the fuel filter disposed on the downstream side of the fuel pump, and an injector for injecting the fuel to the unit swing type engine, are disposed in this order in the fuel supply pathway; a pressure regulator by which part of the fuel is returned into the fuel tank when the fuel pressure between the fuel pump and the injector is increased to reach a predetermined pressure is provided on the downstream side of the fuel filter; and the pressure regulator is accommodated in the support case together with the fuel filter.

The invention according to claim 9 is characterized in that the fuel filter is disposed at a position below the injector in the vehicle vertical direction.

### [Effect of the Invention]

According to the invention of claim 1, the link is attached to a lower portion of the crankcase, thereby securing a space on the upper surface side of the crankcase, and the fuel filter is disposed on the upper surface of the crankcase by utilizing the space effectively. This ensures that the fuel filter is oscillated together with the crankcase, and, therefore, the capacity of the fuel filter can be freely set without any restriction imposed due to oscillations of the unit swing type engine.
In addition, since the fuel filter is provided on the upper surface of the crankcase, the fuel filter can be protected by the crankcase from flying stones, muddy water and the like coming from the vehicle lower side.

According to the invention of claim 2, the exhaust pipe is extended from the cylinder part, and the exhaust pipe is extended toward the vehicle rear side through the lower side of the crankcase. Since the fuel filter is disposed on the upper surface of the crankcase and the exhaust pipe is disposed on the lower side of the crankcase, transfer of heat from the exhaust pipe to the fuel filter is restrained by the crankcase.

According to the invention of claim 3, the intake system is disposed on the upper side of the unit swing type engine, and the fuel filter is disposed on the lower side of the connecting tube of the intake system. Since the throttle body is a component which is comparatively large in size in the radial direction of the intake passage, the space between the throttle body and the unit swing type engine tends to be narrow. In contrast, the connecting tube is smaller than the throttle body in size in the radial direction. Therefore, a large space can be secured between the connecting tube and the crankcase, so that the capacity of the fuel filter can be made larger.

According to the invention of claim 4, the luggage box dismountably supported on the body frame is provided on the upper side of the intake system, the fuel filter is disposed on the upper surface of the crankcase, with its longitudinal direction set along the vehicle width direction, and mounting and dismounting of the fuel filter can be conducted on the vehicle upper side when the luggage box has been dismounted from the body frame. If the fuel filter is disposed with its longitudinal direction set vertical, the amount of protrusion of the fuel filter from the upper surface of the crankcase would be large. In this connection, according to the present invention, the fuel filter is disposed with its longitudinal direction set along the vehicle width direction, that is, set horizontal, whereby the amount of protrusion of the fuel filter from the upper surface of the crankcase can be suppressed to a small amount. As a result, it is possible to dispose the intake system and the luggage box as close as possible to the crankcase upper surface, and to restrain the vehicle from being vertically enlarged.
In addition, since access to the fuel filter can be attained by only dismounting the luggage box, operations for mounting and dismounting the fuel filter onto and from the crankcase can be facilitated.

According to the invention of claim 5, the fuel filter is mounted to the crankcase in the form of being housed in the support case. Since the fuel filter is thus covered by the support case, deposition of muddy water or the like onto the fuel filter can be restrained.

According to the invention of claim 6, the support case with the fuel filter housed therein is fastened to the crankcase through the fastening part. Besides, the fastening part is disposed on the outer side of the connecting tube in the vehicle width direction.
At the time of inserting a tool toward the fastening part, the tool can be made to reach the fastening part without interference with the connecting tube, since the connecting tube is not disposed on the upper side of the fastening part. Thus, the insertion of the tool to the fastening part can be carried out easily, and operations for mounting and dismounting the fuel filter can be performed easily.

According to the invention of claim 7, the fuel filter is disposed on the upper surface of the crankcase, with its longitudinal direction set along the longitudinal direction of the starter motor. This ensures that the limited space at the crankcase upper surface can be utilized effectively, and the fuel filter and the starter motor can be laid out while restraining the crankcase from being enlarged in size.

According to the invention of claim 8, the pressure regulator and the fuel filter are housed together in the support case. Therefore, as compared with the case where the pressure regulator and the fuel filter are supported separately, the number of component parts can be reduced and a reduction in parts cost can be contrived.

According to the invention of claim 9, the fuel filter is disposed at a position below the injector. This makes it possible to suppress the possibility that the fuel might leak from the injector due to the weight of the fuel accumulated in the fuel filter in the case where the vehicle is parked for a long time.

### [Brief Description of the Drawings]

FIG. 1 is a left side view of a scooter type vehicle according to the present invention.
FIG. 2 is a side view of a fuel supply pathway disposed on a body frame.
FIG. 3 is a plan view of the fuel supply pathway disposed on the body frame.
FIG. 4 illustrates mounting of a stay.
FIG. 5 is an exploded perspective view of a support case.
FIG. 6 is a sectional view taken along line 6-6 of FIG. 3.
FIG. 7 is a sectional view of a fuel filter.
FIG. 8 is a sectional view of a pressure regulator.

### [Mode for Carrying Out the Invention]

A mode for carrying out the present invention will be described below, based on the accompanying drawings. Incidentally, the drawings are to be viewed according to the posture of reference symbols, and arrow (FRONT) in the drawings indicates the front side (forward direction) with respect to a vehicle.

### [Embodiment]

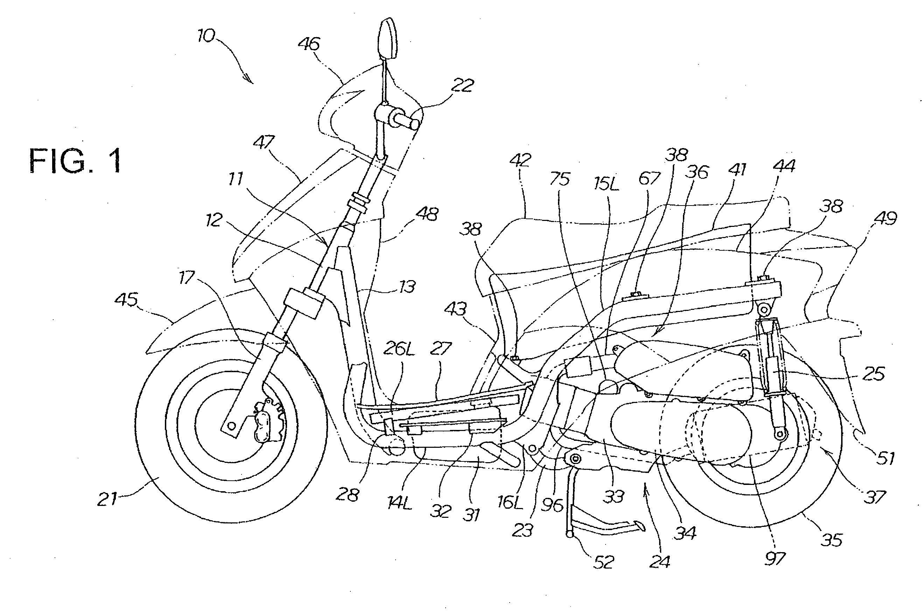

In the first place, an embodiment of the present invention will be described, based on the drawings.
As shown in FIG. 1, a scooter type vehicle 10 as a motorcycle has a body frame 11 serving as a skeleton thereof. The body frame 11 includes a head pipe 12 constituting a front end portion thereof, a down frame 13 extending downward from the head pipe 12, a pair of left and right lower frames 14L and 14R (only symbol 14L on the viewer's side is shown) extending rearward from a lower portion of the down frame 13, a pair of left and right rear frames 15L and 15R (only symbol 15L on the viewer's side is shown) extending rearwardly upward from rear portions of the lower frames 14L and 14R, and a pair of left and right link support brackets 16L and 16R (only symbol 16L on the viewer's side is shown) attached to intermediate portions of the rear frames 15L and 15R.

A front fork 17 is steerably mounted to the head pipe 12, a front wheel 21 is mounted to the lower ends of the front fork 17, and a bar handle 22 is attached to the upper end of the front fork 17.
Besides, in this scooter type vehicle 10, a power unit 24 is vertically oscillatably mounted to the link support brackets 16L and 16R through a link 23, and a rear cushion unit 25 is bridgingly mounted between a rear end portion of the power unit 24 and a rear end portion of the rear frame 15L.

A pair of left and right floor pipes 26L and 26R (only symbol 26L on the viewer's side is shown) extending in the vehicle front-rear direction are provided on the upper side of the lower frames 14L and 14R. On the upper side of the floor pipes 26L and 26R, a step floor 27 on which to put the driver's feet is disposed along the floor pipes 26L and 26R. The lower frames 14L and 14R are provided with a floor pipe stay 28 for supporting the floor pipes 26L and 26R, and with a fuel tank stay 32 for supporting the fuel tank 31.

The power unit 24 is comprised of a unit swing type engine 33 constituting a front portion thereof, and a continuously variable transmission 34 integrally connected to a rear portion of the unit swing type engine 33. A rear wheel 35 is mounted to a rear portion of the continuously variable transmission 34.

An intake system 36 is disposed on the upper side of the unit swing type engine 33. An exhaust system 37 is so disposed as to extend toward the vehicle rear side through the lower side of the unit swing type engine 33.
In addition, the scooter type vehicle 10 has a luggage box 41 dismountably supported on the body frame 11 by fastening members 38, on the upper side of the intake system 36.

Incidentally, symbol 42 denotes a seat, symbol 43 denotes a seat lower cover for covering the lower side of the seat 42, symbol 44 denotes a rear side cover, symbol 45 denotes a front fender, symbol 46 denotes a handle cover, symbol 47 denotes a front cover, symbol 48 denotes a leg shield, symbol 49 denotes a tail lamp, symbol 51 denotes a rear fender, and symbol 52 denotes a main stand.

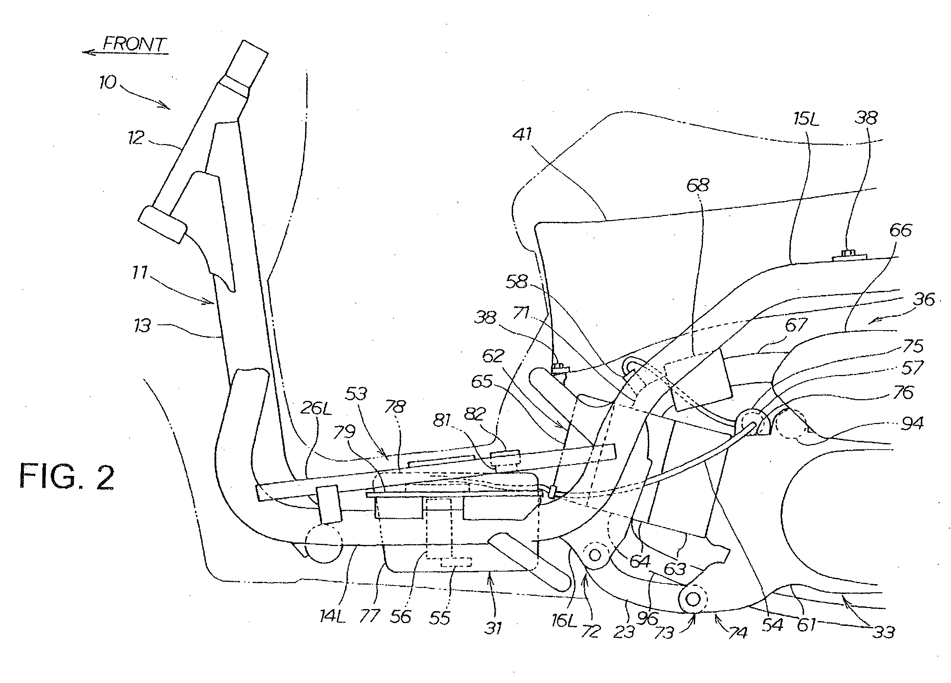

Now, a fuel supply system and the intake system 36 will be described below.
As shown in FIG. 2, the fuel supply system 53 of the scooter type vehicle 10 has the fuel tank 31, and a fuel supply pathway 54 through which a fuel in the fuel tank 31 is supplied to the unit swing type engine 33.

A pre-pump filter 55 by which the fuel in the fuel tank 31 is clarified, a fuel pump 56 disposed on the downstream side of the pre-pump filter 55, a fuel filter 57 which is disposed on the downstream side of the fuel pump 56 and of which the pore size is finer than that of the pre-pump filter 55, and an injector 58 for injecting the fuel to the side of the unit swing type engine 33, are arranged in this order in the fuel supply pathway 54.

The unit swing type engine 33 includes a crankcase 61 for accommodating a crankshaft (not shown), and a cylinder part 62 projecting from the crankcase 61 toward the vehicle front side. Besides, the cylinder part 62 includes a cylinder block 63, a cylinder head 64, and a head cover 65 in this order from the crankcase 61 side.

The intake system 36 includes an air cleaner for clarifying air taken in from the exterior, a connecting tube 67 extended from the air cleaner 66, a throttle body 68 connected to the connecting tube 67, and an intake pipe 71 extended from the throttle body 68. The intake pipe 71 is connected to the cylinder part 62. More specifically, the intake pipe 71 is connected to an upper surface of the cylinder head 64.
The injector 58 is attached to the intake pipe 71, and the fuel is supplied to the unit swing type engine 33 by the injector 58.

The body frame 11 is provided with the link support bracket 16L, a front end 72 of the link 23 is attached to the link support bracket 16L, and a rear end 73 of the link 23 is attached to a lower portion 74 of the crankcase 61.
The fuel filter 57 is housed in a support case 75, and the support case 75 is mounted to an upper surface 76 of the crankcase 61. The fuel filter 57 is disposed on the lower side of the connecting tube 66 and at a position below the injector 58 on the vehicle vertical direction.

In addition, the pore size of the fuel filter 57 and that of the pre-pump filter 55 are made to be different; specifically, the fuel filter 57 is set to be finer than the pre-pump filter 55 in pore size. Therefore, even in the case where a fuel containing fine dust, such as ethanol, is used, the fine dust having failed to be caught by the pre-pump filter 55 is caught by the fuel filter 57. Accordingly, such fuels as ethanol can also be used.

The fuel tank 31 is a container having a structure in which a tank upper half 78 bulging upward is put on a tank lower half 77 hollowed downward and the tank halves are united together by joining them at a flange part 79. The fuel tank 31 is provided with an upwardly extending oil filler port 81 at a rear portion of the tank upper half 78, and the oil filler port 81 is fitted with a fuel cap 82. Besides, the fuel pump 56 inserted from above is mounted to a front portion of the tank upper half 78, and the fuel pump 56 is provided with the pre-pump filter 55.

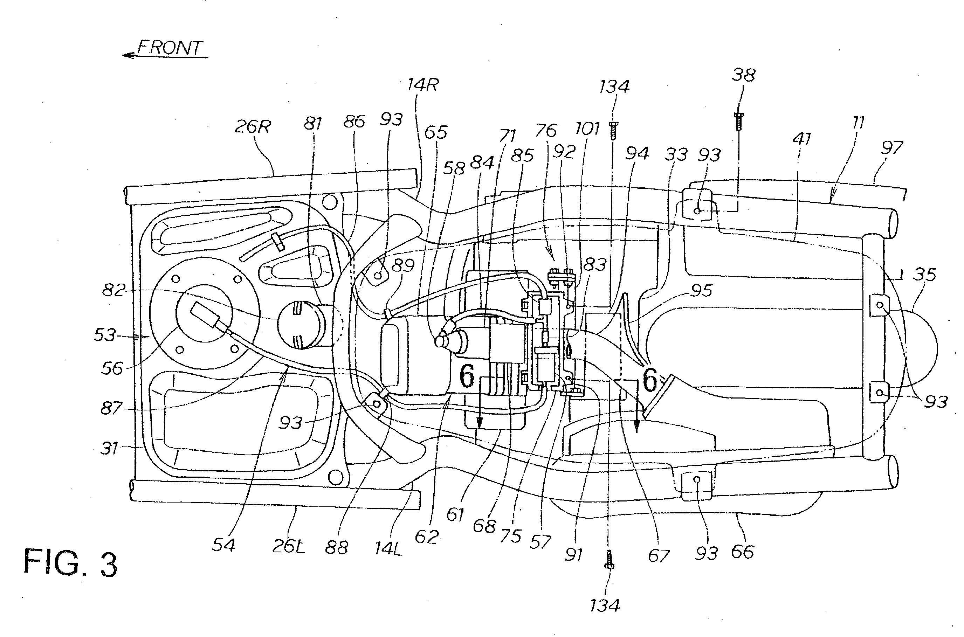

Now, the layout of the fuel supply system 53 and the fuel filter 57 in plan view will be described below. As shown in FIG. 3, the fuel supply system 53 includes the fuel tank 31, the fuel supply pathway 54, a pressure regulator 85 connected between a fuel pipe 83 and a fuel pipe 84, and a return pipe 86 connected to the pressure regulator 85 and the fuel tank 31. The fuel supply pathway 54 includes a fuel pipe 87 by which the fuel pump 56 mounted to the fuel tank 31 and the fuel filter 57 are connected to each other, and fuel pipes 83 and 84 by which the fuel filter 57 and the injector 58 are connected to each other.
Incidentally, the pressure regulator 85 is a component by which part of the fuel is returned into the fuel tank 31 through the return pipe 86 when the fuel pressure between the fuel pump 56 and the injector 58 in the fuel supply pathway 54 is increased to reach a predetermined pressure.

The fuel pipe 87 is connected to the fuel pump 56 at one end thereof and to the fuel filter 57 at the other end thereof. In addition, an intermediate portion of the fuel pipe 87 is held by a pipe clip 88 provided on the head cover 65.
The fuel pipe 83 is connected to the fuel filter 57 at one end thereof and to the upstream side of the pressure regulator 85 at the other end thereof.

The fuel pipe 84 is connected to a branch side upstream of the pressure regulator 85 at one end thereof and to the injector 58 at the other end thereof. This ensures that the fuel in the fuel tank 31 is supplied through the injector 58 to the side of the unit swing type engine 33.
The return pipe 86 is connected to the pressure regulator 85 at one end thereof and to an upper surface of the fuel tank 31 at the other end thereof. Besides, an intermediate portion of the return pipe 86 is held by a pipe clip 89 provided on the head cover 65.

The fuel filter 57 housed in the support case 75 is disposed on the upper surface 76 of the crankcase 61 so that its longitudinal direction is set along the vehicle width direction. Fastening parts 91 and 92 for fastening the support case 75 to the crankcase 61 are located on the outer sides of the connecting tube 67 in plan view. This ensures that when the luggage box 41 has been dismounted from the body frame 11, mounting and dismounting of the fuel filter 57 can be conducted on the vehicle upper side. Incidentally, the luggage box 41 is mounted to box support parts 93 of the body frame 11 through fastening members 38.

In addition, the starter motor 94 is disposed on the upper surface 76 of the crankcase 61. The fuel filter 57 is disposed on the upper surface 76 of the crankcase 61 so that its longitudinal direction is set along the longitudinal direction of the starter motor 94.
Incidentally, symbol 95 denotes a shield plate provided at the connecting tube 67. The shield plate 95 protects the fuel filter 57 from stones, muddy water and the like thrown up by the rear wheel 35.

In addition, a pipeline composed of the fuel pipes 87, 83 and 84 ranging from the fuel tank 31 to the injector 58 is formed in a substantially U shape.
Thus, the pipeline composed of the fuel pipes 87, 83 and 84 is formed in a substantially U shape, and the pipeline composed of the fuel pipes 87, 83 and 84 is made to be long. This ensures that, even when the proportions of ethanol and gasoline are varied due to fuel supply in the case where a fuel admixed with ethanol is used, the fuel pipes 87, 83 and 84 ranging from the fuel tank 31 to the injector 58 are being filled with the fuel before the change in the proportions of ethanol and gasoline, and an ECU has already learned the proportions. Therefore, a fuel injection optimum for starting the unit swing type engine 33 can be performed, so that the unit swing type engine 33 can be started favorably. After the starting, the ECU re-learns the change in the proportions, based on information from an O₂ sensor, and a fuel injection optimum for the current proportions of ethanol and gasoline can be carried out.

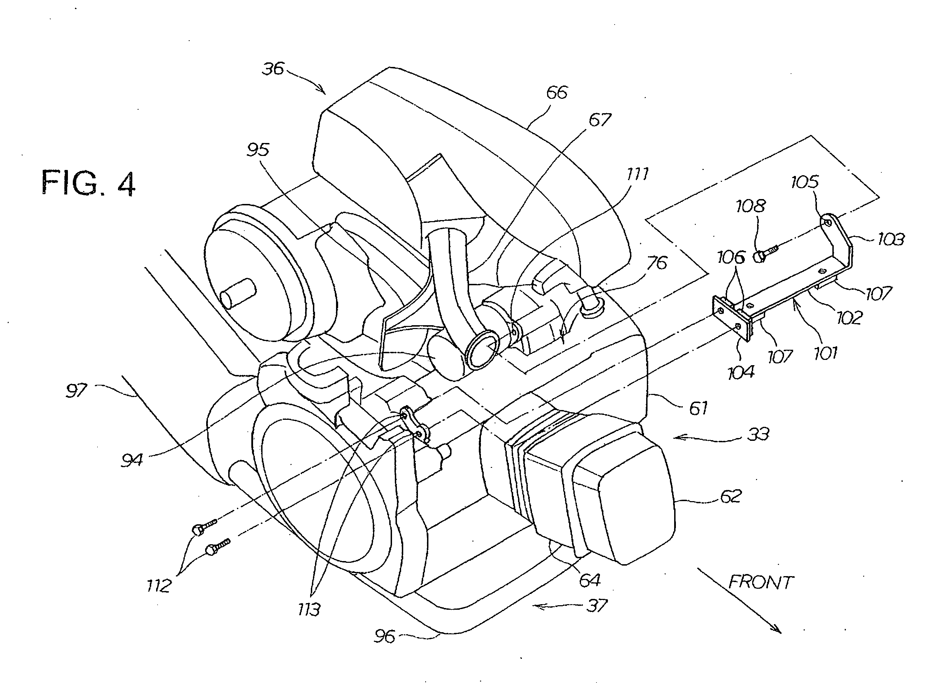

Now, mounting of a stay for holding the exhaust system 37 and the support case 75 will be described below.
As shown in FIG. 4, the exhaust system 37 includes an exhaust pipe 96 extending from the cylinder part 62 (specifically, a lower surface of the cylinder head 64) toward the vehicle rear side through the lower side of the crankcase 61, and a muffler 97 connected to the exhaust pipe 96.

The stay 101 for holding the support case (symbol 75, FIG. 3) includes a flat plate part 102, a first bent part 103 and a second bent part 104 which are bent from the flat plate part 102, a mounting hole 105 provided in the first bent part 103, nuts 106 welded to the second bent part 104, and nuts 107 welded to the flat plate part 102.

Mounting of the stay 101 to the crankcase 61 will be described.
On the side of the first bent part 103, a bolt 108 is passed through the mounting hole 105, and is screwed into a mounting hole 111 in the starter motor 94, whereby the first bent part 103 is fastened together with the starter motor 94. On the side of the second bent part 104, bolts 112 are passed through mounting holes 113 provided in the crankcase 61, and are fastened into the nuts 106. As a result, the stay 101 is mounted to the crankcase 61.

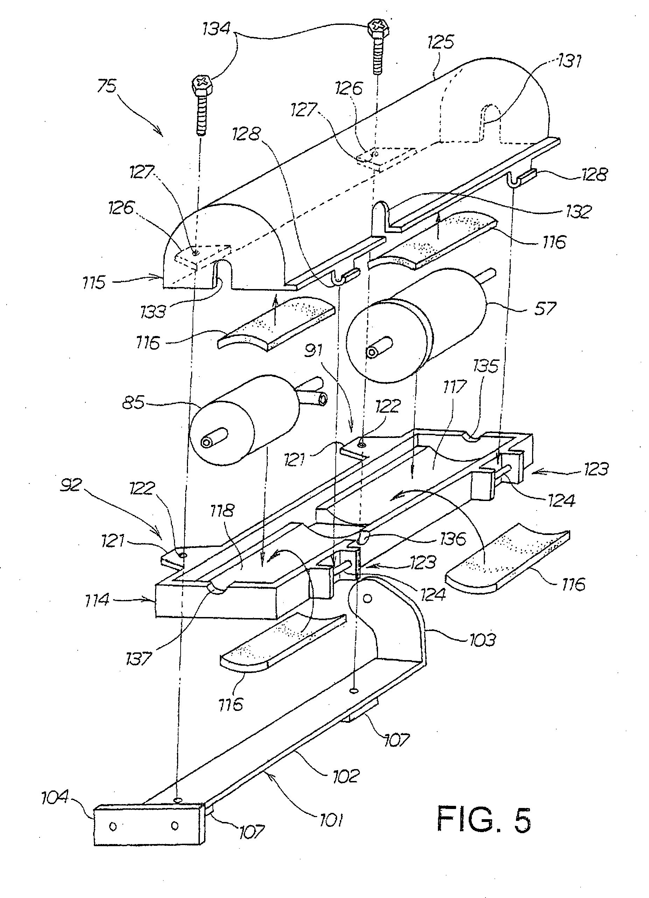

Now, mounting of the fuel filter 57 and the pressure regulator 85 will be described below.
As shown in FIG. 5, the support case 75 includes a case 114, a cover 115, and rubbers 116.
The case 114 includes an oil filter disposing part 117 for disposing the oil filter 57, a pressure regulator disposing part 118 for disposing the pressure regulator 85, projected parts 121 to be mounted on the stay 101, through-holes 122 provided in the projected parts 121, and pins 124 at hinge parts 123.
In addition, the case 114 is provided with a groove 135 through which to pass the fuel pipe (symbol 87, FIG. 3), a groove 136 through which to pass the fuel pipe (symbol 84, FIG. 3), and a groove 137 through which to pass the return pipe (symbol 86, FIG. 3).

The cover 115 includes a cover body 125, projected parts 126, through-holes 127 provided in the projected parts 126, J-shaped hooks 128, a groove 131 through which to pass the fuel pipe (symbol 87, FIG. 3), a groove 132 through which to pass the fuel pipe (symbol 84, FIG. 3), and a groove 133 through which to pass the return pipe (symbol 86, FIG. 3).

In mounting, the oil filter 57 and the pressure regulator 85 are sandwiched between the rubbers 116, and they, in the sandwiched state, are disposed respectively in the oil filter disposing part 117 and the pressure regulator disposing part 118.
Next, the cover 115 is put on the oil filter 57 and the pressure regulator 85 in the manner of hooking the hooks 128 of the cover 115 on the pins 124 of the case 114.

Then, fastening members 134 are passed through the through-holes 127 and the through-holes 122, and are fastened (screwed) into the nuts 107 of the stay 101.
As a result, the fuel filter 57 and the pressure regulator 85 are housed together in the support case 75.

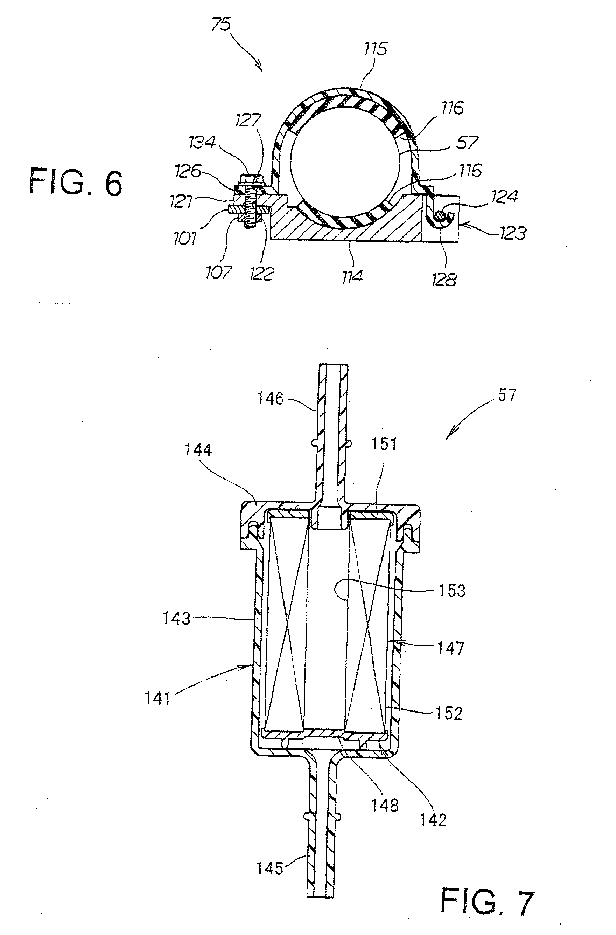

Now, the mounted condition of the support case 75 will be described below, using a sectional view.
As shown in FIG. 6, the fuel filter 57 is housed in the support case 75 in the state of being sandwiched between the rubbers 116. The hooks 128 are hooked on the pins 124, and, on the opposite side, the projected parts 126 and the projected parts 121 are fastened to the stay 101 by the fastening members 134. Holding of the cover 115 onto the case 114 and mounting of the support case 75 onto the stay 101 can thus be performed using the common fastening members 134, whereby a reduction in the number of component parts can be contrived.

Now, the fuel filter 57 will be described below.
As shown in FIG. 7, the fuel filter 57 includes a filter case 141, and a filter assembly 142 housed in the filter case 141.
The filter case 141 includes a case body 143 in the form of a bottomed cylinder, and a case cover 144 for closing an opening part of the case body 143.

The case body 143 has a fuel suction port 145 which is connected to the fuel pipe (symbol 87, FIG. 3) on the side of the fuel tank (symbol 31, FIG. 3) and through which the fuel is sucked in, and the case cover 144 has a fuel discharge port 146 which is connected to the fuel pipe (symbol 83, FIG. 3) on the side of the injector (symbol 58, FIG. 3) and through which the fuel is discharged.

The filter assembly 142 is comprised of a cylindrical filter 147 made of a filter paper, and frame bodies 148 and 151 for supporting both ends of the filter 147. The filter assembly 142 is fixed in the state of being clamped between the case body 143 and the case cover 144.

The fuel is sucked through the fuel suction port 145 into the inside of the filter case 141, and passes through the filter 147 in the manner of flowing from an outer peripheral surface 152 of the filter 147 to an inner peripheral surface 153 of the filter 147, during when it is filtered, and the thus filtered fuel is discharged through the fuel discharge port 146 to the outside of the filter case 141.

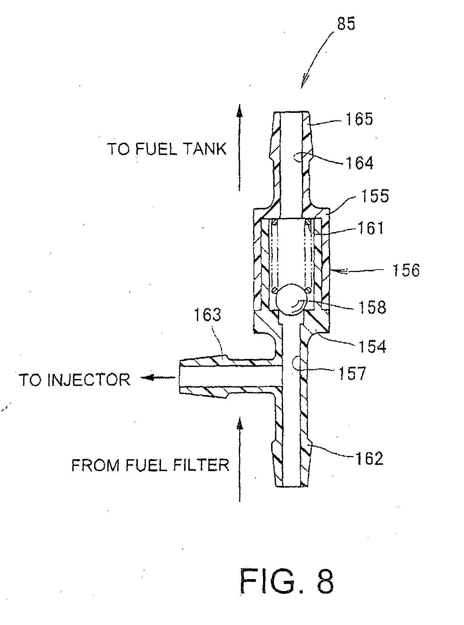

Now, the pressure regulator 85 will be described below.
As shown in FIG. 8, the pressure regulator 85 includes a case 156 having a resin-made first case 154 and a resin-made second case 155 joined to each other, a steel-made spherical valve element 158 for opening/closing a communication hole 157 opened in a bottom on one end side of the case 156, a compression coil spring 161 for biasing the valve element 158 in a direction for closing the communication hole 157, a fuel suction port 162 in which the communication hole 157 is opened, a fuel discharge port 163 formed at an intermediate portion of the fuel suction port 162, and a fuel return port 165 provided with a communication hole 164 opened in a bottom on the other end side of the case 156.

The fuel suction port 162 is connected to the fuel filter (symbol 57, FIG. 3) through the fuel pipe 83, whereas the fuel discharge port 163 is connected to the injector (symbol 58, FIG. 3) through the fuel pipe 84, and the fuel return port 165 is connected to the fuel tank (symbol 31, FIG. 3) through the fuel pipe 86.

As shown in FIGS. 1, 2 and 3 above, the scooter type vehicle 10 includes the body frame 11, the unit swing type engine 33 swingably supported on the body frame 11 through the link 23, the fuel tank 31 supported on the body frame 11, the fuel supply pathway 54 through which the fuel in the fuel tank 31 is supplied to the unit swing type engine 33, and the fuel filter 57 which is disposed at an intermediate portion of the fuel supply pathway 54 and by which the fuel is clarified. In the scooter type vehicle 10, the link 23 is mounted to a lower portion of the crankcase 61 of the unit swing type engine 33, and the fuel filter 57 is disposed on the upper surface 76 of the crankcase 61.

With this configuration, the link 23 is attached to the lower portion 74 of the crankcase 61, thereby securing a space on the side of the crankcase upper surface 76, and the fuel filter 57 is disposed on the upper surface 76 of the crankcase 61 by utilizing this space effectively. As a result, the fuel filter 57 is oscillated together with the crankcase 61. Therefore, the capacity of the fuel filter 57 can be freely set without any restriction imposed due to oscillations of the unit swing type engine 33.
In addition, since the fuel filter 57 is provided on the upper surface 76 of the crankcase 61, the fuel filter 57 can be protected by the crankcase 61 from flying stones, muddy water and the like coming from the lower side of the vehicle.

As shown in FIGS. 1 and 4 above, the unit swing type engine 33 includes the cylinder part 62 projected from the crankcase 61 toward the vehicle front side, and the exhaust pipe 96 extending from the cylinder part 62 toward the vehicle rear side through the lower side of the crankcase 61.

With this configuration, the fuel filter 57 is disposed on the upper surface 76 of the crankcase 61, and the exhaust pipe 96 is disposed on the lower side of the crankcase 61, so that transfer of heat from the exhaust pipe 96 to the fuel filter 57 is restrained by the crankcase 61.

As shown in FIGS. 1 and 2 above, the intake system 36 is disposed on the upper side of the unit swing type engine 33, and the intake system 36 includes the intake pipe 71 connected to the cylinder part 62 and extending rearward from the cylinder part 62, the throttle body 68 connected to a rear portion of the intake pipe 71, the connecting tube 67 connected to a rear portion of the throttle body 68 and passing on the upper side of the crankcase 61, and the air cleaner 66 connected to a rear portion of the connecting tube 67. The fuel filter 57 is disposed on the lower side of the connecting tube 67.

In this configuration, the space between the throttle body 68 and the unit swing type engine 33 tends to be a narrow space, since the throttle body 68 is a component which is comparatively large in size in the radial direction of the intake passage. In contrast, the connecting tube 67 is smaller than the throttle body 68 in radial size, so that a large space can be secured between the connecting tube 67 and the crankcase 61, and the capacity of the fuel filter 57 can be enlarged accordingly.

As shown in FIGS. 1, 2, 3 and 4 above, the scooter type vehicle 10 has a structure in which the luggage box 41 dismountably supported on the body frame 11 is disposed on the upper side of the intake system 36, and the fuel filter 57 is disposed on the upper surface 76 of the crankcase 61, with its longitudinal direction set along the vehicle width direction, so that mounting and dismounting of the fuel filter 57 can be carried out on the upper side of the vehicle when the luggage box 41 has been dismounted from the body frame 11.

If the fuel filter 57 is disposed with its longitudinal direction set vertical, the amount of protrusion of the fuel filter 57 from the upper surface 76 of the crankcase 61 would be large. In connection with this point, in the present invention, the fuel filter 57 is disposed with its longitudinal direction set along the vehicle width, namely, set horizontal, so that the amount of protrusion of the fuel filter 57 from the upper surface 76 of the crankcase 61 can be suppressed to a small amount. As a result, the intake system 36 and the luggage box 41 can be set as close as possible to the crankcase upper surface 76, and the vehicle can be restrained from being vertically enlarged.
In addition, since access to the fuel filter 57 is secured by only dismounting the luggage box 41, operations for mounting and dismounting the fuel filter 57 onto and from the crankcase 61 can be facilitated.

As shown in FIGS. 2, 3, 5 and 6 above, the fuel filter 57 is accommodated in the support case 75, and the support case 75 is mounted to the crankcase 61.
In this configuration, the fuel filter 57 is covered with the support case 75 and, therefore, deposition of muddy water or the like onto the fuel filter 57 can be restrained.

As shown in FIGS. 3 and 5 above, the fastening direction in fastening the support case 75 to the crankcase 61 is in the vehicle vertical direction, and the fastening parts 91 and 92 for fastening the support case 75 to the crankcase 61 are located at the outer sides of the connecting tube 67 in the vehicle width direction.

With this configuration, at the time of inserting a tool toward the fastening parts 91 and 92, the tool can be inserted to reach the fastening part without interference with the connecting tube 67, since the connecting tube 67 is not present on the upper side of the fastening part. Thus, it becomes easier to insert the tool to the fastening part, so that operations for mounting and dismounting the fuel filter 57 can be carried out easily.

As shown in FIGS. 2 and 3 above, the starter motor 94 is disposed on the upper surface 76 of the crankcase 61, and the fuel filter 57 is disposed on the upper surface 76 of the crankcase 61 so that its longitudinal direction is set along the longitudinal direction of the starter motor 94.

With this configuration, the limited space at the crankcase upper surface 76 can be utilized effectively, and the fuel filter 57 and the starter motor 94 can be laid out while restraining the crankcase 61 from being enlarged in size.

As shown in FIGS. 3 and 5 above, the pre-pump filter 55 by which the fuel in the fuel tank 31 is clarified, the fuel pump 56 disposed on the downstream side of the pre-pump filter 55, the fuel filter 57 disposed on the downstream side of the fuel pump 56, and the injector 58 for injecting the fuel into the unit swing type engine 33 are arranged in this order in the fuel supply pathway 54, the pressure regulator 85 through which part of the fuel is returned to the fuel tank 31 when the fuel pressure between the fuel pump 56 and the injector 58 is increased to reach a predetermined pressure is provided on the downstream side of the fuel filter 57, and the pressure regulator 85 is housed in the support case 75 together with the fuel filter 57.

This configuration makes it possible to reduce the number of component parts and to contrive a reduction in parts cost, as compared with the case where the pressure regulator 85 and the fuel filter 57 are supported separately.

As shown in FIG. 2 above, the fuel filter 57 is disposed at a position below the injector 58 in the vertical direction of the vehicle.
This configuration ensures that the fuel can be restrained from leaking from the injector 58 due to the weight of the fuel accumulated in the fuel filter 57 in the case where the vehicle is parked for a long time.

Incidentally, the present embodiment is not limited to the scooter type vehicle 10 on which an engine using gasoline as a fuel is mounted. The embodiment may be applied to a scooter type vehicle 10 on which a unit swing type engine 33 using a bio-fuel such as ethanol as a fuel is mounted.

### [Industrial Applicability]

The present invention is preferable for application to a scooter type vehicle in which a fuel filter is provided outside a fuel tank.

### [Description of Reference Symbols]

10 ... Scooter type vehicle, 11 ... Body frame, 23 ... Link, 31 ... Fuel tank, 33 ... Unit swing type engine, 36 ... Intake system, 41 ... Luggage box, 54 ... Fuel supply pathway, 55 ... Pre-pump filter, 56 ... Fuel pump, 57 ... Fuel filter, 58 ... Injector, 61 ... Crankcase, 62 ... Cylinder part, 66 ... Air cleaner, 67 ... Connecting tube, 68 ... Throttle body, 71 ... Intake pipe, 72 ... Front end of link, 73 ... Rear end of link, 74 ... Lower portion of crankcase, 75 ... Support case, 76 ... Upper surface of crankcase, 85 ... Pressure regulator, 94 ... Starter motor, 96 ... Exhaust pipe, 101 ... Stay.

## Claims

1. A scooter type vehicle (10) comprising a body frame (11), a unit swing type engine (33) swingably supported on the body frame (11) through a link (23), a fuel tank (31) supported on the body frame (11), a fuel supply pathway (54) through which a fuel in the fuel tank (31) is supplied to the unit swing type engine (33), and a fuel filter (57) which is disposed at an intermediate portion of the fuel supply pathway (54) and by which the fuel is clarified, with its longitudinal direction set along the vehicle width direction a luggage box (41) dismovatably supported on the body frame (11);
wherein the link (23) is attached to a lower portion of a crankcase (61) of the unit swing type engine, **characterized in that** the fuel filter (57) is disposed on an upper surface of the crankcase (61) via a stay (101), and
mounting and dismounting of the fuel filter (57) can be carried out on the upper side of the vehicle when the luggage box (41) has been dismounted from the body frame (11).

2. The scooter type vehicle according to claim 1, wherein the unit swing type engine (33) has a cylinder part (62) projecting from the crankcase (61) toward the vehicle front side, and an exhaust pipe (96) extending from the cylinder part toward the vehicle rear side through the lower side of the crankcase (61).

3. The scooter type vehicle according to claim 2, wherein an intake system is disposed on the upper side of the unit swing type engine (33);
the intake system includes an intake pipe (71) connected to the cylinder part (62) and extending rearward from the cylinder part, a throttle body (68) connected to a rear portion of the intake pipe (71), a connecting tube (67) connected to a rear portion of the throttle body (68) and passing on the upper side of the crankcase (61), and an air cleaner (66) connected to a rear portion of the connecting tube (67); and
the fuel filter (57) is disposed on the lower side of the connecting tube (67).

4. The scooter type vehicle according to claim 3,
wherein the scooter type vehicle has a luggage box (41) dismountably supported on the body (11) frame on the upper side of the intake system and the fuel filter (57) is accommodated in a support case (75), and the support case (75) is mounted to the crankcase (61).

5. The scooter type vehicle according to claim 4,
wherein a fastening direction in fastening the support case (75) to the crankcase (61) is in the vehicle vertical direction, and
a fastening part for fastening the support case (75) to the crankcase (61) is located on an outer side of the connecting tube in the vehicle width direction.

6. The scooter type vehicle according to claim 5,
wherein a starter motor (94) is disposed on an upper surface of the crankcase (61), and
the fuel filter (57) is disposed on the upper surface of the crankcase (61), with its longitudinal direction set along the longitudinal direction of the starter motor (94).

7. The scooter type vehicle according to claim 6,
wherein a pre-pump filter (55) by which the fuel in the fuel tank (31) is clarified, a fuel pump (56) disposed on the downstream side of the pre-pump filter (55), the fuel filter (57) disposed on the downstream side of the fuel pump (56), and an injector (58) for injecting the fuel to the unit swing type engine (36), are disposed in this order in the fuel supply pathway;
a pressure regulator (85) by which part of the fuel is returned into the fuel tank (31) when the fuel pressure between the fuel pump (31) and the injector (58) increased to reach a predetermined pressure is provided n the downstream side of the fuel filter (57); and
the pressure regulator (85) is accommodated in the support case (75) together with the fuel filter (57).

8. The scooter type vehicle according to claim 7, wherein the fuel filter (57) is disposed at a position below the injector (58) in the vehicle vertical direction.

## Patentansprüche

1. Fahrzeug (10) vom Roller-Typ, umfassend einen Körper-Rahmen (11), einen Motor (33) vom Schwenkeinheit-Typ, der schwenkbar an dem Körper-Rahmen (11) über ein Gelenk (23) gelagert ist, einen an dem Körper-Rahmen (11) abgestützten Kraftstofftank (31), einen Kraftstoffzufuhrweg (54), durch welchen ein Kraftstoff in dem Kraftstofftank (31) dem Motor (33) vom Schwenkeinheit-Typ zugeführt wird, und einen Kraftstofffilter (57), der an einem Zwischenabschnitt des Kraftstoffzufuhrwegs (54) angeordnet ist, und durch welchen der Kraftstoff geklärt wird, wobei seine Längsrichtung entlang der Fahrzeug-Breitenrichtung eingestellt ist, einen Gepäckkasten (41), der demontierbar an dem Körper-Rahmen (11) abgestützt ist,
wobei das Gelenk (23) an einem unteren Abschnitt eines Kurbelgehäuses (61) des Motors vom Schwenkeinheit-Typ angebracht ist, **dadurch gekennzeichnet, dass** der Kraftstofffilter (57) an einer oberen Fläche des Kurbelgehäuses (61) über eine Stütze (101) angeordnet ist, und
ein Montieren und Demontieren des Kraftstofffilters (57) auf der oberen Seite des Fahrzeugs durchgeführt werden kann, wenn der Gepäckkasten (41) von dem Körper-Rahmen (11) demontiert wurde.

2. Fahrzeug vom Roller-Typ nach Anspruch 1, wobei der Motor (33) vom Schwenkeinheit-Typ einen Zylinder-Teil (62) aufweist, der von dem Kurbelgehäuse (61) zu der Fahrzeug-Vorderseite hin vorsteht, und ein Auspuffrohr (96) aufweist, welches sich von dem Zylinder-Teil zu der Fahrzeug-Rückseite durch die untere Seite des Kurbelgehäuses (61) erstreckt.

3. Fahrzeug vom Roller-Typ nach Anspruch 2, wobei ein Einlass-System auf der oberen Seite des Motors (33) vom Schwenkeinheit-Typ
angeordnet ist,
das Einlass-System ein Einlassrohr (71), das mit dem Zylinderteil (62) verbunden ist und sich von dem Zylinder-Teil aus nach hinten erstreckt, einen Drosselkörper (68), der mit einem hinteren Abschnitt des Einlassrohrs (71) verbunden ist, ein Verbindungsrohr (67), das mit einem hinteren Abschnitt des Drosselkörpers (68) verbunden ist und auf der oberen Seite des Kurbelgehäuses (61) verläuft, und einen Luftreiniger (66) umfasst, der mit einem hinteren Abschnitt des Verbindungsrohrs (67) verbunden ist, und
wobei der Kraftstofffilter (57) an der unteren Seite des Verbindungsrohrs (67) angeordnet ist.

4. Fahrzeug vom Roller-Typ nach Anspruch 3, wobei das Fahrzeug vom Rollertyp einen Gepäckkasten (41) aufweist, der demontierbar an dem Körper-Rahmen (11) an der oberen Seite des Einlass-Systems abgestützt ist, und wobei der Kraftstofffilter (57) in einem Halterungsgehäuse (75) aufgenommen ist, und das Halterungsgehäuse (75) an dem Kurbelgehäuse (61) montiert ist.

5. Fahrzeug vom Roller-Typ nach Anspruch 4, wobei eine Befestigungsrichtung beim Befestigen des Halterungsgehäuses (75) an dem Kurbelgehäuse (61) in der vertikalen Richtung des Fahrzeugs verläuft, und ein Befestigungsteil zum Befestigen des Halterungsgehäuses (75) an dem Kurbelgehäuse (61) sich an einer äußeren Seite des Verbindungsrohrs in der Fahrzeug-Breitenrichtung befindet.

6. Fahrzeug vom Roller-Typ nach Anspruch 5,
wobei ein Anlasser (94) an einer oberen Fläche des Kurbelgehäuses (61) angeordnet ist, und der Kraftstofffilter (57) so an der oberen Fläche des Kurbelgehäuses (61) angeordnet ist, dass seine Längsrichtung entlang der Längsrichtung des Anlassers (94) eingestellt ist.

7. Fahrzeug vom Roller-Typ nach Anspruch 6,
wobei ein Vor-Pumpen-Filter (55), durch welchen der Kraftstoff in dem Kraftstofftank (31) geklärt wird, eine Kraftstoffpumpe (56), die auf der stromabwärtigen Seite des Vor-Pumpen-Filters (55) angeordnet ist, der Kraftstofffilter (57), der auf der stromabwärtigen Seite der Kraftstoffpumpe (56) angeordnet ist, und eine Einspritzeinrichtung (58) zum Einspritzen des Kraftstoffs zu dem Motor (36) vom Schwenkeinheit-Typ in dieser Reihenfolge in dem Kraftstoffzufuhrweg angeordnet sind, wobei ein Druck-Regulator (85), durch welchen ein Teil des Kraftstoffs in den Kraftstofftank (31) zurück geführt wird, wenn der Kraftstoffdruck zwischen der Kraftstoffpumpe (31) und der Einspritzeinrichtung (58) so erhöht wird, dass er einen vorbestimmten Druck erreicht, auf der stromabwärtigen Seite des Kraftstofffilters (57) vorgesehen ist, und wobei der Druck-Regulator (85) in dem Halterungsgehäuse (75) zusammen mit dem Kraftstofffilter (57) aufgenommen ist.

8. Fahrzeug vom Roller-Typ nach Anspruch 7, wobei der Kraftstofffilter (57) an einer Position unter der Einspritzeinrichtung (58) in der vertikalen Richtung des Fahrzeugs angeordnet ist.

## Revendications

1. Véhicule de type scooter (10) comprenant un cadre de carrosserie (11), un groupe moteur de type oscillant (33) supporté de façon oscillante sur le cadre de carrosserie (11) par l'intermédiaire d'une bielle (23), un réservoir de carburant (31) supporté sur le cadre de carrosserie (11), une voie d'alimentation en carburant (54) à travers laquelle un carburant dans le réservoir de carburant (31) est fourni au groupe moteur de type oscillant (33), et un filtre à carburant (57) qui est disposé à une partie intermédiaire de la voie d'alimentation en carburant (54) et par lequel le carburant est clarifié, avec son sens longitudinal établi le long du sens de la largeur du véhicule ; un compartiment à bagage (41) supporté de façon démontable sur le cadre de carrosserie (11) ;
dans lequel la bielle (23) est fixée à une partie inférieure d'un carter moteur (61) du groupe moteur de type oscillant, **caractérisé en ce que** le filtre à carburant (57) est disposé sur une surface supérieure du carter moteur (61) par l'intermédiaire d'un potelet (101) ; et
le montage et le démontage du filtre à carburant (57) peuvent être réalisés sur le côté supérieur du véhicule lorsque le compartiment à bagage (41) a été démonté du cadre de carrosserie (11).

2. Véhicule de type scooter selon la revendication 1, dans lequel le groupe moteur de type oscillant (33) comporte une partie cylindre (62) faisant saillie à partir du carter moteur (61) vers le côté avant du véhicule, et un tuyau d'échappement (96) s'étendant à partir de la partie cylindre vers le côté arrière du véhicule à travers le côté inférieur du carter moteur (61).

3. Véhicule de type scooter selon la revendication 2, dans lequel un système d'admission est disposé sur le côté supérieur du groupe moteur de type oscillant (33) ;
le système d'admission comprend un tuyau d'admission (71) raccordé à la partie cylindre (62) et s'étendant vers l'arrière à partir de la partie cylindre, un corps de papillon des gaz (68) raccordé à une portion arrière du tuyau d'admission (71), un tube de raccordement (67) raccordé à une portion arrière du corps de papillon des gaz (68) et passant sur le côté supérieur du carter moteur (61), et un filtre à air (66) raccordé à une portion arrière du tube de raccordement (67) ; et
le filtre à carburant (57) est disposé sur le côté inférieur du tube de raccordement (67).

4. Véhicule de type scooter selon la revendication 3,
dans lequel le véhicule de type scooter comporte un compartiment à bagage (41) supporté de façon démontable sur le cadre de carrosserie (11) sur le côté supérieur du système d'admission et le filtre à carburant (57) est logé dans un carter de support (75), et le carter de support (75) est monté sur le carter moteur (61).

5. Véhicule de type scooter selon la revendication 4,
dans lequel un sens de fixation dans la fixation du carter de support (75) au carter moteur (61) est dans le sens vertical du véhicule, et
une partie de fixation pour fixer le carter de support (75) au carter moteur (61) est située sur un côté extérieur du tube de raccordement dans le sens de la largeur du véhicule.

6. Véhicule de type scooter selon la revendication 5,
dans lequel un démarreur (94) est disposé sur une surface supérieure du carter moteur (61), et
le filtre à carburant (57) est disposé sur la surface supérieure du carter moteur (61), avec son sens longitudinal établi le long du sens longitudinal du démarreur (74).

7. Véhicule de type scooter selon la revendication 6,
dans lequel un filtre de pré-pompe (55) par lequel le carburant dans le réservoir de carburant (31) est clarifié, une pompe à carburant (56) disposée sur le côté aval du filtre de pré-pompe (55), le filtre à carburant (57) disposé sur le côté aval de la pompe à carburant (56), et un injecteur (58) pour injecter le carburant dans le groupe moteur de type oscillant (36), sont disposés dans cet ordre dans la voie d'alimentation en carburant ;
un régulateur de pression (85) par lequel une partie du carburant est renvoyée dans le réservoir de carburant (31) lorsque la pression de carburant entre la pompe à carburant (31) et l'injecteur est augmentée pour atteindre une pression prédéterminée, est prévu sur le côté aval du filtre à carburant (57) ; et
le régulateur de pression (85) est logé dans le carter de support (75) conjointement avec le filtre à carburant (57).

8. Véhicule de type scooter selon la revendication 7, dans lequel le filtre à carburant (57) est disposé à une position sous l'injecteur (58) dans le sens vertical du véhicule.
